# EUROPEAN PATENT APPLICATION

(11) **EP 2 323 355 A1**
(43) Date of publication of application: **18.05.2011**
(21) Application number: 09811216.2
(22) Date of filing: 23.06.2009
(51) Int. Cl.: H04M 1/247, H04M 1/62

(54) **PORTABLE TERMINAL DEVICE AND INPUT OPERATION METHOD AND DISPLAY CONTROL METHOD OF THE PORTABLE TERMINAL DEVICE**

(30) Priority: 03.09.2008 JP 2008226157
(71) Applicant: Panasonic Corporation, Kadoma-shi Osaka 571-8501 (JP)
(72) Inventor: HASHIMOTO, Yuji c/o Panasonic Corporation, IPROC, Chuo-ku, Osaka 540-6207 (JP); GOMYO, Kazumasa c/o Panasonic Corporation, IPROC, Chuo-ku, Osaka 540-6207 (JP); IINO, Satashi c/o Panasonic Corporation, IPROC, Chuo-ku, Osaka 540-6207 (JP); ISHIHARA, Tomohiro c/o Panasonic Corporation, IPROC, Chuo-ku, Osaka 540-6207 (JP)
(74) Representative: Grünecker, Kinkeldey, Stockmair & Schwanhäusser Anwaltssozietät
(86) International application number: PCT/JP2009/002877
(87) International publication number: WO 2010/026686

(57) **Abstract**

A purpose of the invention is to provide a portable phone capable of allowing a user to comfortably use an application when the portable phone is placed on a mounting object such as a desk, and to provide an input operation method and a display control method of the portable phone. A horizontal state of a lower housing (1A) of the portable phone (1) is detected by the horizontal sensor (101), a contact of the lower housing (1A) of the portable phone (1) to a mounting object such as a desk is detected by an illumination sensor (102), an open state of an upper housing (1B) of the portable phone (1) is detected by an open/close sensor (103), an application under operation at present is read, and an operation way and a display content of the portable phone (1) are changed based on the above detection results and the application under operation at present. Consequently, it is possible to prevent lowering of the operability and visibility of the display in a desktop mode in which the portable phone (1) is placed on a mounting object such as a desk.

## Description

### Technical Field

The present invention relates to a portable terminal device having a communication function and a function capable of performing various applications of a television, a viewer, a browser and the like, and relates to an input operation method and a display control method of the portable terminal device.

### Background Art

In small information devices such as portable phones, portable personal computers (so-called PCs) or the like, there has been a device that is modified so as to enable an adequate operation or action according to a usage mode such as a different handling way (holding by one hand or both hands) or a placement on a desk.

For example, in a portable phone device disclosed in the patent document 1, when hands-free telephoning is carried out (telephoning is carried out in a state that the device is usually placed on a charging stand), gains of transmission and reception signals are changed by detecting the state of the hands-free telephoning.

In an information processing device disclosed in the patent document 2, a designation mark movement operation section and a control operation section are arranged at portions where fingers can reach when the information processing device is held by both hands. A convex portion is provided at a bottom face of the information processing device so as to improve operability with respect to an operation key, the indication mark movement operation section, the control operation section and the like.

In a portable phone disclosed in the patent document 3, the portable phone includes a bottom face contact sensing switch provided at a rear face of its body and a horizontal sensor capable of detecting that the body is placed in the horizontal state. Accordingly, when the portable phone is in contact with a mounting object and is placed in a horizontal direction, an action of a vibrator is stopped so that a large sound is not generated nor the portable phone is dropped from the mounting object.

### Prior Art Documents

### Patent Documents

Patent Document 1: JP-A-2007-005881
Patent Document 2: JP-A-2005-322260
Patent Document 3: JP-A-2004-274438

### Summary of Invention

### Problems that the Invention is to Solve

In the described conventional devices, the operability or usability is improved. However, when an application for watching, viewing or browsing a television (a so-called one-segment broadcasting program), still or movie pictures, or home pages, is utilized, the application is not comfortably used. In a case where, for example, the portable phone is placed on a mounting object such as a desk or the like, a display at an operation section may be diagonally seen so that it is hard to see, and it is impossible to make it easy to see. In addition, unless an operation is carried out by pressing a housing having operation keys (for example, a lower housing of a foldable portable phone), the portable phone is shaken so that it is hard to operate it. It is impossible to operate the keys without pressing the housing.

In view of the above circumstances, a purpose of the invention is to provide a portable terminal device capable of allowing a user to comfortably use an application in a case where the portable terminal device is used while being placed on a mounting object such as a desk or the like, and to provide an input operation method and a display control method of the portable terminal device.

### Means for solving the Problems

A portable terminal device according to the invention includes an operating section for input instruction, a detecting section that detects that a housing is placed on a mounting object, and a change section that changes a control of the operating section based on a detection result of the detecting section and an application under operation at present.

With the above configuration, it is possible to prevent lowering of operability at a time when the portable terminal device is used by being placed on a mounting object such as a desk or the like. Particularly, by changing the operation to one corresponding to an application, the operability is improved. Also, by assimilating an operation specification of the portable terminal device to an operation specification of a device such as a personal computer or the like which is operated by being placed on a desk, it is possible to achieve an accustomed operation, e.g., an operation by an index finger.

In addition, a portable terminal device according to the invention includes a display section that displays various information, a detecting section that detects that a housing is placed on a mounting object, and a change section that changes a control of the display section based on a detection result of the detecting section and an application under operation at present.

With the above configuration, it is possible to prevent degradation in visibility of a display at a time when the portable terminal device is used by being placed on a mounting object such as a desk or the like. Particularly, by changing the display to one corresponding to an application, the operability is improved. Also, by assimilating a display specification of the portable terminal device to a display specification of a device such as a personal computer or the like which is operated by being placed on a desk, it is possible to achieve an accustomed operation, e.g., an operation by an index finger.

Additionally, in the portable terminal device according to the invention, the detecting section has a horizontal sensor which detects whether or not the housing is in a horizontal state and a contact sensor which detects whether or not either one of faces of the housing is in contact with the mounting object, and detects that the housing is placed on the mounting object, when the horizontal sensor detects that the housing is in the horizontal state and the contact sensor detects that the contact state continues for a predetermined time period.

With the above configuration, it is possible to improve the precision of detecting that the portable terminal device is placed on a mounting object such as a desk or the like.

Furthermore, in the portable terminal device according to the invention, the housing includes an upper housing having the display section and a lower housing having the operating section, the upper housing is rotatably connected to the lower housing through a hinge. The detecting section detects that the housing is placed on the mounting object, when the horizontal sensor detects that the lower housing is in the horizontal state and the contact sensor detects that the contact state continues for the predetermined time period.

With the above configuration, it is possible to improve the precision of detecting that the portable terminal device is placed on a mounting object such as a desk or the like.

Moreover, in the portable terminal device according to the invention, the display section and the operating section are respectively provided on faces of the upper housing and the lower housing which are opposed to each other, when the upper housing and the lower housing are in a folded state. The detecting section has an open/close sensor which detects an open state or a close state of the upper housing and the lower housing. The detecting section detects that the housing is placed on the mounting object, when the open/close sensor detects that the upper housing and the lower housing are opened.

With the above configuration, it is possible to improve the precision of detecting that the portable terminal device is placed on a mounting object such as a desk or the like.

Moreover, in the portable terminal device according to the invention, the operating section has a touch pad equipped with a key pad. The detecting section detects that the housing is gripped by a hand. The change section changes the control so as to allow the operating section to operate as the touch pad when the housing is placed on the mounting object and so as to allow the operating section to operate as the key pad when the housing is gripped by a hand.

With the above configuration, it is possible to improve the operability when the portable terminal device is placed on a mounting object such as a desk or the like.

Moreover, the portable terminal device according to the invention, has an operation button provided at a side face of the housing. The change section replaces the operation by the operation button with the operation by the touch pad, when the housing is placed on the mounting object.

With the above configuration, it is possible to solve a problem that in a case where the portable terminal device is used by being placed on a mounting object such as a desk or the like, the operation of the operation buttons becomes hard. By replacing the operation with one by the touch pad, the operation can be performed by actions of fingers on the touch pad, that is, the operation by the fingers so that the operation can be facilitated as compared to a case where the operation is carried out by consciously using the operation buttons. Particularly, in a case where the portable terminal device is placed on a mounting object such as a desk or the like, not only the operation buttons provided at the side face but also the operation buttons provided at the front face have to be diagonally seen so that it is hard to see them. However, since display of the operation buttons is not used in the operation by the touch pad, such a problem can be avoided.

Moreover, in the portable terminal device according to the invention, the change section displays a pointer for aiding the operation by the touch pad on the display section, when the housing is placed on the mounting object.

With the above configuration, since the pointer for aiding the operation by the touch pad is displayed on the display section, it is possible to further improve the operability.

Moreover, in the portable terminal device according to the invention, the change section changes the display section to an enlarged display, when a specific application is activated in a state that the housing is placed on the mounting object.

With the above configuration, the display can be made easy to see. That is, in a state that the portable terminal device is placed on the mounting object such as a desk or the like, a sight line distance (a distance between an eye and the display) is longer as compared to a case where the portable terminal device is held by a hand. However, by performing enlarged display, the visibility is improved.

An input operation method according to the invention, includes an operation step of performing an input instruction, a detection step of detecting that a housing is placed on a mounting object, and a change step of changing a control of the operation step based on a detection result in the detection step and an application under operation at present.

With the above method, it is possible to prevent degradation in the operability at a time when the portable terminal device is placed on a mounting object such as a desk or the like. Particularly, by changing the operation to one corresponding to an application, the operability can be improved. By assimilating an operating specification of the portable terminal device to an operation specification of a device such as a personal computer or the like which is operated by being placed on a desk or the like, it is possible to achieve an accustomed operation, e.g., an operation by an index finger.

A display control method according to the invention, includes a display step of displaying various information, a detection step of detecting that a housing is placed on a mounting object, and a change step of changing a control of the operation step based on a detection result in the detection step and an application under operation at present.

With the above method, it is possible to prevent degradation in the visibility when the portable terminal device is placed on a mounting object such as a desk or the like. Particularly, by changing the display to one corresponding to an application, the operability can be improved. By assimilating a display specification of the portable terminal device to a display specification of a device such as a personal computer or the like which is operated by being placed on a desk, it is possible to achieve an accustomed operation, e.g., an operation by an index finger.

### Advantage of the Invention

In accordance with the invention, it is possible to comfortably use an application in a case where the portable terminal device is used by being placed on a mounting object such as a desk or the like.

### Brief Description of the Drawings

[Fig. 1] Fig. 1 is a block diagram showing a schematic structure of a portable phone according to an embodiment of the invention.
[Fig. 2] Fig. 2 is an elevational view showing the portable phone shown in Fig. 1.
[Fig. 3] Fig. 3 is a block diagram showing a state detection sensor, a placement state detection section and a main control section of the portable phone shown in Fig. 1.
[Fig. 4] Fig. 4 is a schematic view showing a state that the portable phone shown in Fig. 1 is placed on a mounting object such as a desk or the like.
[Fig. 5] Fig. 5 is a schematic view showing a state that the portable phone shown in Fig. 1 is held by a hand and is operated.
[Fig. 6] Fig. 6 is a schematic view showing an operation of changing a channel by using a touch pad of the portable phone shown in Fig. 1.
[Fig. 7] Fig. 7 is a schematic view showing an operation of adjusting a volume by using a touch pad of the portable phone shown in Fig. 1.
[Fig. 8] Fig. 8 is a schematic view showing an operation of key input by using a touch pad of the portable phone shown in Fig. 1.
[Fig. 9] Fig. 9 is a schematic view showing changing a display before and after activating a browser by the portable phone shown in Fig. 1.
[Fig. 10] Fig. 10 is a flowchart explanatorily showing a process of detecting a placement state of the portable phone shown in Fig. 1.
[Fig. 11] Fig. 11 is a flowchart explanatorily showing a process of changing an operation in the portable phone shown in Fig. 1.
[Fig. 12] Fig. 12 is an elevational view showing a slidable and tiltable portable phone to which the invention can be adopted.

### Mode for Carrying Out the Invention

A preferable embodiment of the invention is described below in detail with reference to drawings.

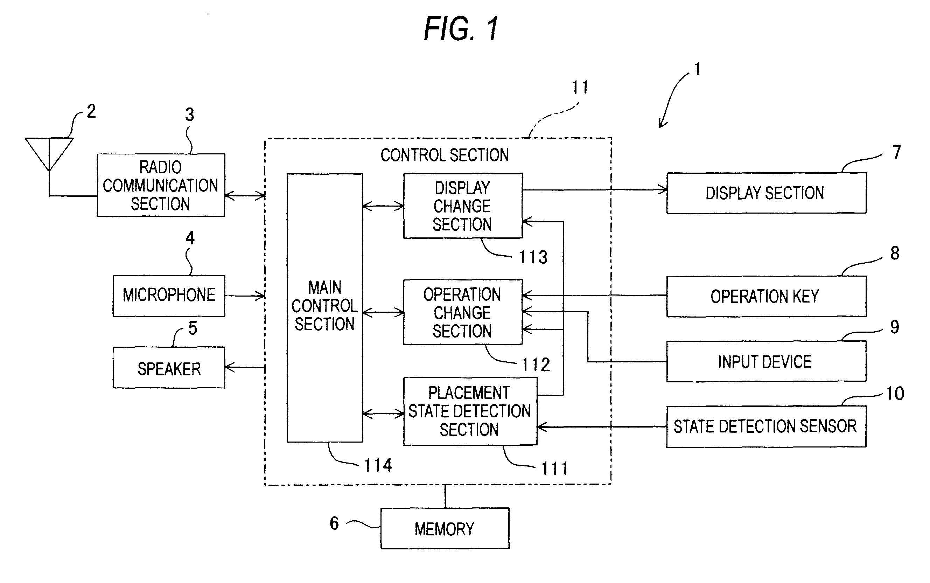

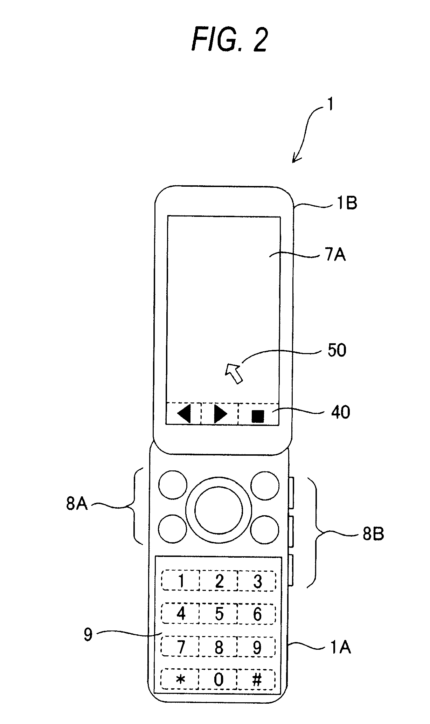

Fig. 1 is a block diagram showing a schematic structure of a portable phone according to an embodiment of the invention. Fig. 2 is an elevational view showing the portable phone of the embodiment. The portable phone of the embodiment is a foldable portable phone in which an upper housing and a lower housing are rotatably interconnected by a hinge. A part collectively having buttons for operations is called as "a lower housing 1A" and a part having a display is called as "an upper housing 1B". The portable phone of the embodiment has functions of executing various applications such as "viewer", "browser", "television" and the like in addition to a normal function of communication. The viewer is an audiovisual application for viewing a still image, a movie image or the like, and the browser is an audiovisual application for browsing a home page on the Internet. The television is an audiovisual application for watching a so-called one-segment broadcasting.

In Figs. 1 and 2, the portable phone 1 of the embodiment includes an antenna 2 used for transmission or reception of radio communication signals, a radio communication section 3 that transmits or receives radio communication signals, a microphone 4 that picks up a sound, a speaker 5 that outputs a sound, a memory 6 that stores a control program for operating a control section 11, a display section 7 that displays a display indicative of an operation of the portable phone 1 or an image (a movie image, a still image),an operation key 8 by which inputting for operating the portable phone 1 is carried out, an input device 9 such as a key pad, a touch pad and the like, a state detection sensor 10 used for detecting a placement state of the portable phone 1, and the control section 11 that controls the above described sections of the portable phone 1.

As shown in Fig. 2, the display section 7 has a display 7A and performs displaying in accordance with display data from the control section 11. Software keys 40 are displayed at a lower part of a display screen on the display 7A in a predetermined operation time. For example, a part of the operation key 8 is assigned to the software keys 40. As the display 7A, for example, an LCD (a Liquid Crystal Display) or an organic EL (Electro Luminescence) is used. As shown in Fig. 2, the operation key 8 includes front face buttons 8A positioned on a portion just above the input device 9 at a front face side of the lower housing 1A or side face buttons 8B positioned on a side face at a right hand with respect to the front face. The side face buttons 8B include, for example, a channel change button, a volume button, a picture record button and the like.

The input device 9 includes a plate-shaped sensor. A change in an electrostatic amount of a capacitor constituted by the plate-shaped sensor and a finger of a person makes it possible to detect where the finger is positioned so as to correlate a position of the finger to a numeric or a symbol (#, *). A trajectory of the finger moved on a surface of the plate-shaped sensor is correlated to an action of a pointer 50 on the screen (see Fig. 2). In a case where the input device 9 is used for the key pad, the trajectory is correlated to a numeric or a symbol (#, *). In a case where it is used for the touch pad, the trajectory is correlated to an action of the pointer 50 (see Fig. 2).

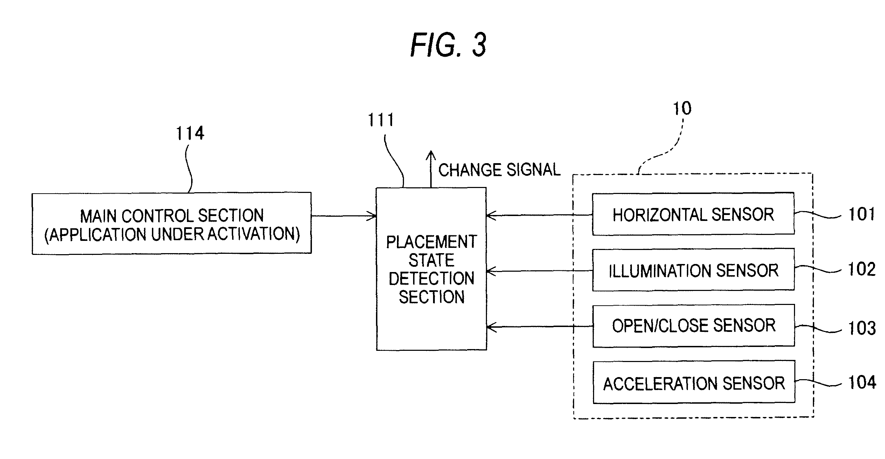

The state detection sensor 10 includes, as shown in Fig. 3, a horizontal sensor 101, an illumination sensor 102, an open/close sensor 103 and an acceleration sensor 104. The horizontal sensor 101 is used for detecting that the lower housing 1A of the portable phone 1 is horizontally placed. The illumination sensor 102 is an example of a contact sensor and is used for detecting that a bottom face of the lower housing 1A of the portable phone 1 is in contact with a desk or the like. The open/close sensor 103 is used for detecting that the upper housing 1B is opened. The acceleration sensor 104 is used for detecting that a person does not hold the portable phone 1. An output signal of the state detection sensor 10 is input to a placement state detection section 111 described later.

In Fig. 1, the control section 11 controls the radio communication section 3, fetches an audio signal from the microphone 4 and outputs an audio signal to the speaker 5. In addition, the control section 11 has the placement state detection section 111, an operation change section 112, a display change section 113 and a main control section 114. The control section 11 detects a placement state of the portable phone 1 and changes an operation way and a display content. The placement state detection section 111 detects that the lower housing 1A is horizontally placed on a mounting object such as a desk or the like in a state that the upper housing 1B of the portable phone 1 is opened in accordance with an output signal of the state detection sensor 10, and reads an application under activation at present from the main control section 114. The control section 11 has a timer (not shown) and uses it for measuring an elapsed time period when the portable phone 1 is placed on a mounting object such as a desk or the like. In the embodiment, a mode in a case where the portable phone 1 is used by being placed on a mounting object such as a desk or the like, is called as a desktop mode.

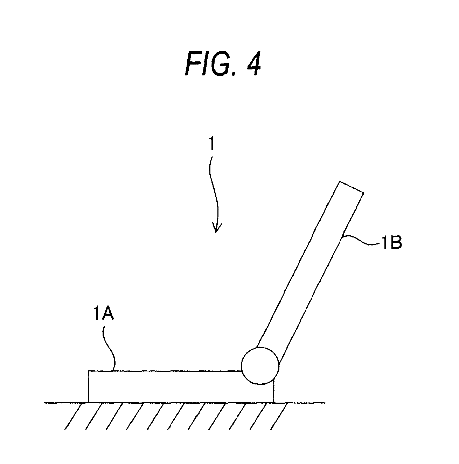

Fig. 4 shows a state of the portable phone 1 of which the lower housing 1A is horizontally placed on a mounting object such as a desk or the like in a state that the upper housing 1B is opened. In a case where it is detected that the lower housing 1A of the portable phone 1 is horizontally placed on a mounting object such as a desk or the like in a state that the upper housing 1B is opened, when a specific application is activated, the placement state detection section 111 inputs a change signal to the display change section 113 and the operation change section 112, the change signal being for changing the operation way and the display content of the portable phone 1 to the operation and the display according to the application during the activation.

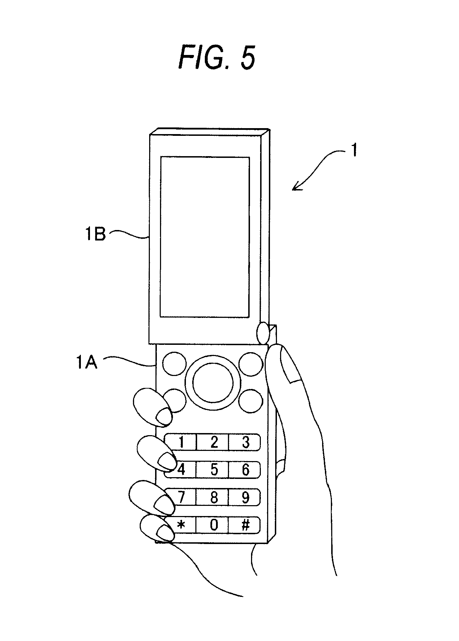

The operation change section 112 allows the input device 9 to operate as the touch pad or the key pad in response to the output signal of the placement state detection section 111 and the activation state of the application. That is, in a case where it is detected that the lower housing 1A of the portable phone 1 is horizontally placed on a mounting object such as a desk or the like in a state that the upper housing 1B is opened when a specific application is activated, the input device 9 is allowed to operate as the touch pad. In a case where it is detected that the portable phone 1 is held by a hand of a user, the input device 9 is allowed to operate as the key pad. The state that the portable phone 1 is horizontally placed is a state shown in Fig. 4. The state that the portable phone 1 is held by the hand of the user is a state shown in Fig. 5.

In Fig. 1, the display change section 113 assigns the side face buttons 8B of the operation key 8 in response to the output signal of the placement state detection section 111. In a case where, for example, various buttons such as a channel change button, a volume button, a picture record button and the like which are used for watching and listening a television, are attached to a side face of the lower housing 1A of the portable phone 1, operating of the buttons becomes hard when the portable phone 1 is placed on a mounting object such as a desk or the like. Therefore, software keys to be substituted with the side face buttons 8B of the portable phone 1 and the pointer 50 are displayed on a display screen of the display 7A. When the touch pad of the lower housing 1A is operated, operations can be carried out similarly to those by the various buttons at the side face without operating the buttons. Meanwhile, it is also possible to perform similar changing by using a rear face button (not shown), a button mounted on the upper housing 1B or a touch sensor (all are not shown) in addition to the various button at the side face of the portable phone 1.

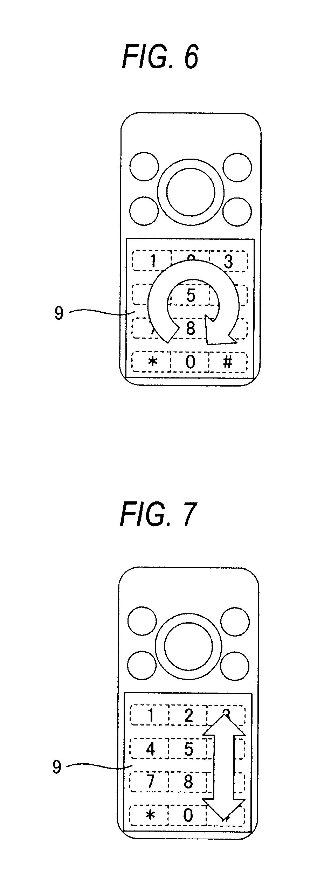

By touching the input device 9 operating as the touch pad by means of a finger and bringing the pointer 50 to the software key so as to operate one of the front face buttons 8A of the operation key 8, the software key can be pressed. By performing an operation of touching the touch pad so as to draw a circle as shown in Fig. 6, changing of the channel can be performed. By performing an operation of touching the touch pad so as to draw a vertical straight line, increasing or decreasing of the volume can be performed. The changing of the channel, increasing or decreasing of the volume, recording of a picture or the like by using the touch pad is performed by the control section 11 based on an output signal of the touch panel. In a case where the mobile terminal phone 1 is placed on a mounting object such as a desk or the like, the display of the lower housing 1A has to be diagonally seen so that it is hard to see it. Since the display is not related to the operation by the touch pad, such a problem can be avoided.

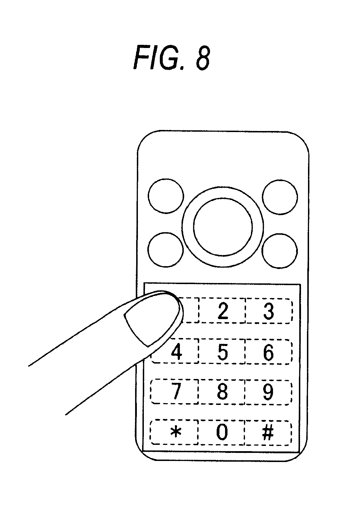

When the television is activated in a state that the portable phone 1 is placed on a mounting object such as a desk or the like, the key pad is not used for determination of pressing of the key and contact of a finger is determined as pressing of the key by the touch pad as shown in Fig. 8, thereby enabling the key input. In a case where the portable phone 1 is placed on a mounting object such as a desk or the like, the portable phone 1 is shaken in inputting by the key unless the operation is performed while fixing the housing. Contrary to the above, in a case of inputting by the touch pad, it is not necessary to operate with a force so that a problem such as shaking can be avoided.

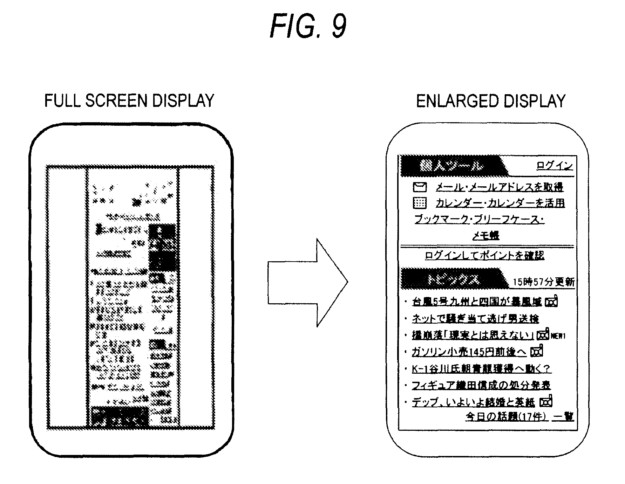

When a browser is activated in a state that the portable phone 1 is placed on a mounting object such as a desk or the like, enlarged display is performed as shown in Fig. 9. In a case where the portable phone 1 is placed on a mounting object such as a desk or the like, a sight line distance (a distance between an eye and the display screen) is longer as compared to a case where the portable phone 1 is held by a hand. However, by performing enlarged display, the visibility is improved.

In a case where the portable phone 1 is held by a hand, the portable phone 1 is firmly gripped and is usually operated by a thumb. However, in a case where the portable phone 1 is placed on a mounting object such as a desk or the like, it is usually operated by an index finger (or a middle finger, or an annular finger). Here, in a case where the portable phone 1 is held by a hand, since the portable phone 1 is firmly gripped, it is possible to carry out the operation by the touch pad with a force. However, in a case where the portable phone 1 is operated by an index finger by being placed on a mounting object such as a desk or the like, when the touch pad is operated with a force, a problem arises that the portable phone 1 becomes instable so as to be shaken. Therefore, in a case where, for example, the portable phone 1 is placed on the mounting object, a threshold value of detection of pressing of the touch pad is lowered rather than a case where the portable phone 1 is held by a hand. With this, the pressing can be carried out without a force.

In a case where the portable phone 1 is placed on a mounting object such as a desk or the like, by disabling operation of various buttons such as the channel change button, the volume button, the picture record button and the like which are provided at the side face of the lower housing 1A of the portable phone 1, power saving can be achieved.

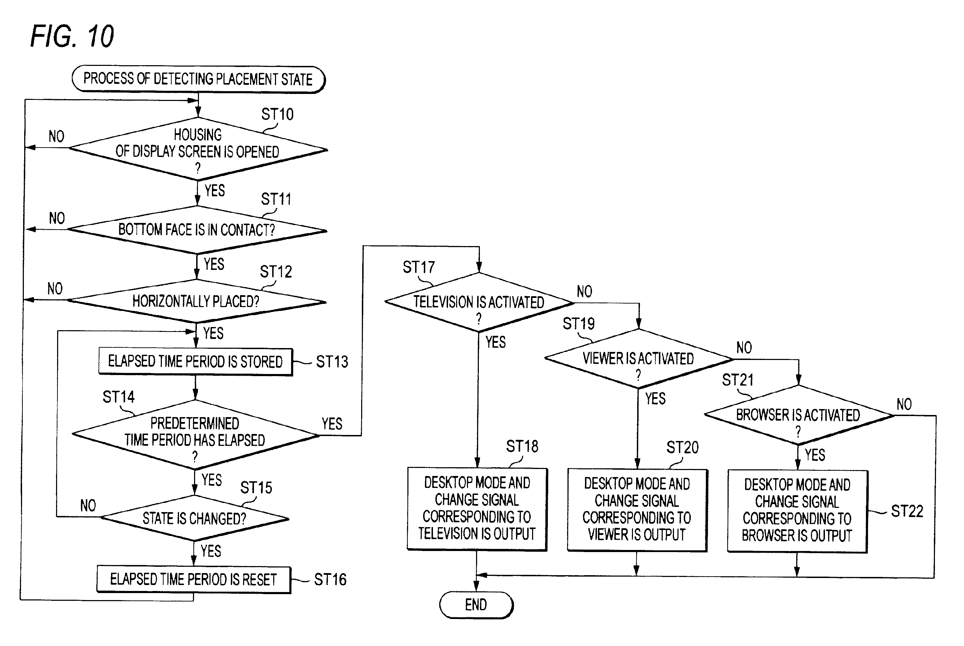

Next, the operation of the portable phone 1 of the embodiment is described below. Fig. 10 is a flowchart showing a process of detecting a placement state of the control section 11 of the portable phone 1 of the embodiment. In Fig. 10, first, it is determined whether or not the upper housing 1B is opened based on an output signal of the open/close sensor 103 (step ST10). When the upper housing 1B is not opened, the determination is repeated until the upper housing 1B is opened. When the upper housing 1B is opened, it is determined whether or not the bottom face of the lower housing 1A is in contact with something based on an output of the illumination sensor 102 (step ST11). When the bottom face of the lower housing 1A is not in contact with anything, the process is returned to the step ST10. When the bottom face of the lower housing 1A is in contact with something, it is determined whether or not the portable phone 1 is horizontally placed based on an output of the horizontal sensor 101 (step ST12). When the portable phone 1 is not horizontally placed, the process is returned to the step ST10. When it is horizontally placed, an elapsed time period is stored (step ST13).

Next, it is determined whether or not a predetermined time period has elapsed (step ST14). When the predetermined time period has not elapsed, it is determined whether or not a state of the portable phone 1 is changed (step ST15). That is, it is determined whether or not the portable phone 1 is placed on a mounting object such as a desk or the like. When there is a change in a state of the portable phone 1 during a predetermined time period, it is determined that the portable phone 1 is not placed on a mounting object such as a desk, the elapsed time period is reset (step ST16) and then the process is returned to the step ST10. Contrary to the above, when it is determined that the elapsed time period exceeds a predetermined time period, it is determined that the portable phone 1 is placed on the mounting object such as the desk, and then the process is proceeded to step ST17.

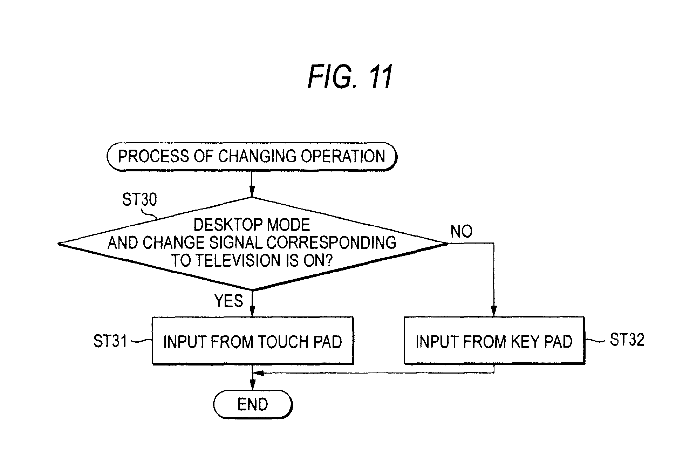

After the process is proceeded to the step ST17, it is determined whether or not an application for watching the television is activated. When the application is activated, a change signal corresponding to the television is output in the desktop mode (step ST18). After the change signal is output, the process is completed. The change signal corresponding to the television is, as described above, a signal for operating, by the touch pad, functions of various buttons such as the channel change button, volume button, record button and the like which are provided at the side face of the lower housing 1A of the portable phone 1 and are used for watching and listening the television. Here, a flowchart of a process of changing an operation is shown in Fig. 11. In Fig. 11, first, it is determined whether or not the change signal corresponding to the television is in an ON-state (step ST30) in the desk top mode. When it is in the ON-state, input via the touch pad is enabled (step ST31). When it is in the OFF-state, input via the key pad is enabled (step ST32).

Returning to Fig. 10, in a case where the application for watching the television is not activated, it is determined whether or not the application of the viewer is activated (step ST19). When the application of the viewer is activated, a change signal corresponding to the viewer is output in the desktop mode (step ST20). After the change signal is output, the process is completed.

When both of the application for watching the television and the application of the viewer are not activated, it is determined whether or not an application of the browser is activated (step ST21). In a case where the application of the browser is activated, a change signal corresponding to the browser is output in the desktop mode (step ST22). After the change signal is output, the process is completed. A user interface corresponding to the browser is, for example, enlarged display.

Thus, in accordance with the portable phone 1 of the embodiment, a horizontal state of the lower housing 1A of the portable phone 1 is detected by the horizontal sensor 101, the contact of the lower housing 1A of the portable phone 1 to a mounting object such as a desk or the like is detected by the illumination sensor 102, the open state of the upper housing 1B of the portable phone 1 is detected by the open/close sensor 103, an application under operation at present is read, and the operation way and the display content of the portable phone 1 are changed based on the above detection results and the application under operation at present. Consequently, it is possible to prevent lowering of the operability and visibility of the display in the desktop mode in which the portable phone 1 is placed on a mounting object such as a desk or the like. Particularly, by changing the operation or display to one corresponding to the application, the operability is improved. In addition, by assimilating an operation specification or a display specification to an operation specification or a display specification of a device such as a personal computer or the like which is operated by being placed on a desk, it is possible to achieve an accustomed operation, e.g., an operation by an index finger.

Meanwhile, the illumination sensor 102 is used for detecting that the bottom face of the lower housing 1A of the portable phone 1 is in contact with something, a camera, a mechanical switch (a bottom face contact sensing switch) or the like in addition to that can be used.

While the open/close sensor 103 is used for detecting that the upper housing 1B of the portable phone 1 is opened in the embodiment, a mechanical open/close switch, a magnetic sensor and the like in addition to that can be used.

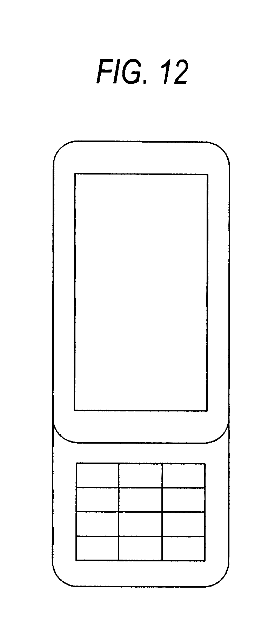

While the foldable portable phone 1 is described in the embodiment, it is not limited thereto. It is possible, of course, to apply the invention to rotational two-axis, L-shaped, cycloid, vertically-horizontally openable, turnable, vertically slidable, horizontally slidable, and straight one screen touch panel type portable phones. Incidentally, Fig. 12 is an elevational view showing a slidable and tiltable portable phone.

While the invention is described in detail by referring to a specific embodiment, it is understood by those of ordinary skill in the art that various modifications and changes can be made without departing from the sprit and scope of the invention.

This application is based on Japanese Patent Application (JP-2008-226157) filed on September 3, 2008, the contents of which are incorporated herein by reference.

### Industrial Applicability

The invention has an advantage in which in a case where the portable terminal device is used by being placed on a mounting object such as a desk or the like, an application can be comfortably used. The invention can be applied to a portable phone or the like that can perform an application for viewing a still picture ,a movie picture or the like, an application for browsing a home page on the internet and an application for watching a television.

### Description of Reference Numerals and Signs

- 1: portable phone
- 1A: lower housing
- 1B: upper housing
- 2: antenna
- 3: radio communication section
- 4: microphone
- 5: speaker
- 6: memory
- 7: display section
- 8: operation key
- 8A: front face button
- 8B: side face button
- 9: input device
- 10: state detection sensor
- 11: control section
- 40: software key
- 50: pointer
- 101: horizontal sensor
- 102: illumination sensor
- 103: open/close sensor
- 104: acceleration sensor
- 111: placement state sensor
- 112: operation change section
- 113: display change section
- 114: main control section

## Claims

1. A portable terminal device comprising:
an operating section for inputting instruction;
a detecting section that detects that a housing is placed on a mounting object; and
a change section that changes a control of the operating section based on a detection result of the detecting section and an application under operation at present.

2. A portable terminal device comprising:
a display section that displays various information;
a detecting section that detects that a housing is placed on a mounting object; and
a change section that changes a control of the display section based on a detection result of the detecting section and an application under operation at present.

3. The portable terminal device according to claim 1 or 2, wherein the detecting section has a horizontal sensor which detects whether or not the housing is in a horizontal state and a contact sensor which detects whether or not either one of faces of the housing is in contact with the mounting object; and
wherein the detecting section detects that the housing is placed on the mounting object, when the horizontal sensor detects that the housing is in the horizontal state and the contact sensor detects that the contact state continues for a predetermined time period.

4. The portable terminal device according to claim 3, wherein the housing includes an upper housing having the display section and a lower housing having the operating section, the upper housing is rotatably connected to the lower housing through a hinge; and
wherein the detecting section detects that the housing is placed on the mounting object, when the horizontal sensor detects that the lower housing is in the horizontal state and the contact sensor detects that the contact state continues for the predetermined time period.

5. The portable terminal device according to claim 4, wherein the display section and the operating section are respectively provided on faces of the upper housing and the lower housing which are opposed to each other, when the upper housing and the lower housing are in a folded state;
wherein the detecting section has an open/close sensor which detects an open state or a close state of the upper housing and the lower housing; and
wherein the detecting section detects that the housing is placed on the mounting object, when the open/close sensor detects that the upper housing and the lower housing are opened.

6. The portable terminal device according to claim 1, wherein the operating section has a touch pad equipped with a key pad;
wherein the detecting section detects that the housing is gripped by a hand;
wherein the change section changes the control so as to allow the operating section to operate as the touch pad when the housing is placed on the mounting object and so as to allow the operating section to operate as the key pad when the housing is gripped by a hand.

7. The portable terminal device according to claim 6, further comprising:
an operation button provided at a side face of the housing,
wherein the change section replaces the operation by the operation button with the operation by the touch pad, when the housing is placed on the mounting object.

8. The portable terminal device according to claim 2, wherein the change section displays a pointer for aiding the operation by the touch pad on the display section, when the housing is placed on the mounting object.

9. The portable terminal device according to claim 8, wherein the change section changes the display section to an enlarged display, when a specific application is activated in a state that the housing is placed on the mounting object.

10. An input operation method comprising:
an operation step of performing an input instruction;
a detection step of detecting that a housing is placed on a mounting object; and
a change step of changing a control of the operation step based on a detection result in the detection step and an application under operation at present.

11. A display control method comprising:
a display step of displaying various information;
a detection step of detecting that a housing is placed on a mounting object; and
a change step of changing a control of the operation step based on a detection result in the detection step and an application under operation at present.

## Amended claims

### Amended claims under Art. 19.1 PCT

1. A portable terminal device comprising:
an operating section for inputting instruction;
a detecting section that detects that a housing is placed on a mounting object; and
a change section that changes a control of the operating section based on a detection result of the detecting section and an application under operation at present,
wherein the operating section has a touch pad equipped with a key pad;
wherein the detecting section detects that the housing is gripped by a hand;
wherein the change section changes the control so as to allow the operating section to operate as the touch pad when the housing is placed on the mounting object and so as to allow the operating section to operate as the key pad when the housing is gripped by a hand.

2. The portable terminal device according to claim 1, further comprising:
an operation button provided at a side face of the housing,
wherein the change section replaces the operation by the operation button with the operation by the touch pad, when the housing is placed on the mounting object.

3. The portable terminal device according to claim 2, further comprising:
a display section that displays various information,
wherein the change section displays a pointer for aiding the operation by the touch pad on the display section, when the housing is placed on the mounting object.

4. An input operation method comprising:
an operation step of performing an input instruction;
a detection step of detecting that a housing is placed on a mounting object; and
a change step of changing a control of the operation step based on a detection result in the detection step and an application under operation at present,
wherein the input instruction by a touch pad equipped with a key pad is performed in the operation step;
wherein it is detected that the housing is gripped by a hand in the detection step; and
wherein the control is changed so as to allow the operating section to operate as the touch pad when the housing is placed on the mounting object and so as to allow the operating section to operate as the key pad when the housing is gripped by a hand in the change step.
